# EUROPEAN PATENT APPLICATION

(11) **EP 2 922 006 A1**
(43) Date of publication of application: **23.09.2015**
(21) Application number: 12888421.0
(22) Date of filing: 27.11.2012
(51) Int. Cl.: G06Q 20/40, G06Q 20/16

(54) **ONLINE PAYMENT METHOD FOR FACE-TO-FACE TRANSACTIONS**

(30) Priority: 19.11.2012 KR 20120130856
(71) Applicant: Guen, Dogyun, Seoul 137-851 (KR)
(72) Inventor: Guen, Dogyun, Seoul 137-851 (KR)
(74) Representative: Flügel Preissner Kastel Schober
(86) International application number: PCT/KR2012/010077
(87) International publication number: WO 2014/077444

(57) **Abstract**

An online meal payment method according to the present invention is carried out by a service providing server in an environment including a client side communication terminal, an affiliated store communication terminal, the service providing server and a payment server. The method includes a first step of receiving order location identification information and order information from the affiliated store communication terminal and registering the order location identification information and the order information; a second step of transmitting bill information to the client side communication terminal; a third step of receiving payment information from the client side communication terminal; a fourth step of carrying out authentication based on the order location identification information and the order information acquired at the first step and the payment information received at the third step; and a fifth step of requesting payment by transmitting payment basic information to the payment server if the authentication is successful.

## Description

### TECHNICAL FIELD

The present invention relates to an online payment method in a face-to-face transaction at a restaurant or at a store. More specifically, the invention relates to an online payment method for conveniently making a payment without exposing payment information such as credit card number or the like to seller.

### BACKGROUND ART

Generally, payment for a food or a beverage at a restaurant is made face-to-face in cash or on a credit card. A waitperson brings a bill to a customer (in this specification, a customer of a restaurant is also referred to as a "user") upon a request from the customer, and then the user makes a payment on a credit card or in cash after confirming the bill and filling in a gratuity. However, this payment takes a lot of time since a waitperson has to move several times for bringing a bill to a user; receiving a credit card from the user and bringing the credit card to a counter where a credit card terminal is installed; acquiring a temporary approval by swiping the credit card; and going back to the table for getting a signature of the user. In addition, there is also a security problem such as credit card cloning since the credit card is handed over to the waitperson.

US Patent Application Publication No. 2009-0037286 published on February 5, 2009 discloses a payment method comprising a step of downloading a bill from a POS system of a restaurant onto a mobile device (PDA) of a waitperson and a step of inputting payment information into the PDA by a user. However, since the user has to input the payment information into the mobile device provided by the restaurant, there is a disadvantage in security such as leakage of credit card information or the like.

On the other hand, a large-scale wholesale store where a user visits to purchase a lot of goods provides the user with a goods-carrier for containing and carrying the goods in the store. The user puts goods into the goods-carrier; takes the goods out of the goods-carrier at a counter; and pays in cash or on a credit card after a cashier sums up the prices of the goods by scanning a bar code or like. The goods taken out of the goods-carrier for bar code scanning are put back into the goods-carrier by the cashier, a helper employee or the user.

This payment process for the goods contained in goods-carrier is quite complicated and troublesome. Korean Patent Application Publication No. 10-2012-0009936 published on February 2, 2012 discloses a method for connecting a user to a purchase information server showing the goods sold in a store and selecting goods therefrom. However, the user should download a list of goods which are sold in the store for selecting goods and making a payment for the selected goods. Further, the user selects goods in the store and then selects the goods from the downloaded list, thereby taking a lot of time for payment.

### DISCLOSURE OF INVENTION

### TECHNICAL PROBLEM

The object of the present invention is to provide a convenient online payment method for both user and affiliated store by enhancing payment information security and enhancing convenience of payment in a face-to-face transaction such as meal payment at a restaurant or payment for a large quantity of goods in a goods-carrier.

### TECHNICAL SOLUTION

An online meal payment method according to the present invention is carried out by a service providing server in an environment including a client side communication terminal, an affiliated store communication terminal, the service providing server and a payment server. The method includes (1) a first step of receiving order location identification information and order information from the affiliated store communication terminal and registering the order location identification information and the order information; (2) a second step of transmitting bill information to the client side communication terminal; (3) a third step of receiving payment information from the client side communication terminal; (4) a fourth step of carrying out authentication based on the order location identification information and the order information acquired at the first step and the payment information received at the third step; and (5) a fifth step of requesting payment by transmitting payment basic information to the payment server if the authentication is successful.

The service providing server may receive a request for transmitting the bill information from the client side communication terminal which recognizes the order location identification information and then transmit the bill information. Alternatively, the service providing server may receive the recognized order location identification information and user identification information from the client side communication terminal which recognizes the order location identification information and then automatically transmit the bill information (a kind of check-in).

The client side communication terminal may be configured as a communication terminal in which the order location identification information is stored. In this case, the bill information may be transmitted to a client side communication terminal corresponding to the order location identification information which is transmitted to the service providing server from the affiliated store communication terminal.

In the case of a Dutch treat, the bill information is information that can be split and displayed by ordered menu items, and the payment information of the third step may be payment information on some of the split and displayed menu items.

On the other hand, a payment corresponding to a plurality of tables can be made at one time, and in this embodiment, the bill information is bill information related to a plurality of pieces of order information corresponding to a plurality of pieces of order location identification information.

According to another aspect of the present invention, there is provided an online goods payment method which can make a payment for goods contained in a goods-carrier. This online goods payment method is carried out by a service providing server in an environment including a client side communication terminal, an affiliated store communication terminal, the service providing server, a goods-carrier including a goods recognition unit, a communication unit and a goods-carrier identifier, and a payment server.

The method includes (1) a first step of receiving goods information recognized by the goods recognition unit and goods-carrier identification information which are transmitted to the affiliated store communication terminal by the goods-carrier, from the affiliated store communication terminal and registering the goods information and the goods-carrier identification information; (2) a second step of transmitting bill information to the client side communication terminal; (3) a third step of receiving payment information from the client side communication terminal; (4) a fourth step of carrying out authentication based on the goods-carrier identification information and the goods information acquired at the first step and the payment information received at the third step; and (5) a fifth step of requesting payment by transmitting payment basic information to the payment server if the authentication is successful.

This method can adopt a check-in type or an embodiment wherein a communication terminal is mounted in a goods-carrier as in the embodiment for the meal payment mentioned above.

### ADVANTAGEOUS EFFECTS

According to the present invention, a waitperson of a restaurant does not need to visit a customer's table several times for a payment, and there is an effect of enhancing security since credit card information or the like is not exposed to the restaurant.

### BRIEF DESCRIPTION OF THE DRAWINGS

FIG. 1 is a view showing an example of an environment for performing an online meal payment method according to the present invention.
FIG. 2 is a sequence diagram showing an online meal payment process according to the present invention.
FIG. 3 is a sequence diagram showing an online meal payment process according to another embodiment of the present invention.
FIG. 4 is a view showing an environment for performing an online meal payment method according to still another embodiment of the present invention.
FIG. 5 is a sequence diagram showing an online meal payment process performed in the environment shown in FIG. 4.
FIG. 6 is a view showing an example of an environment for performing an online goods payment process according to the present invention.
FIG. 7 is a sequence diagram showing an online goods payment process according to the present invention.
FIG. 8 is a sequence diagram showing an online goods payment process according to another embodiment of the present invention.
FIG. 9 is a view showing an environment for performing an online goods payment method according to still another embodiment of the present invention.
FIG. 10 is a sequence diagram showing an online goods payment process performed in the environment shown in FIG. 9.

### BEST MODE FOR CARRYING OUT THE INVENTION

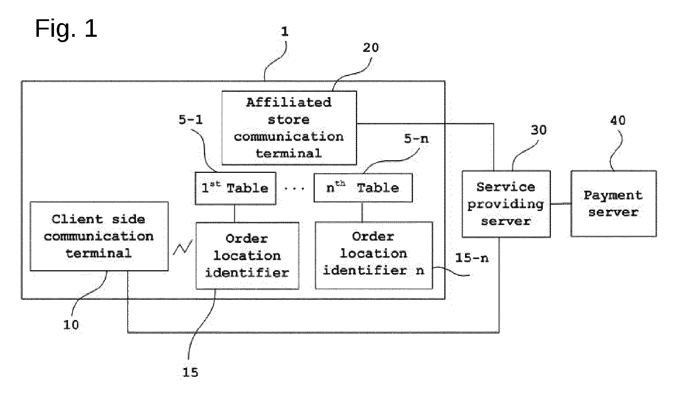

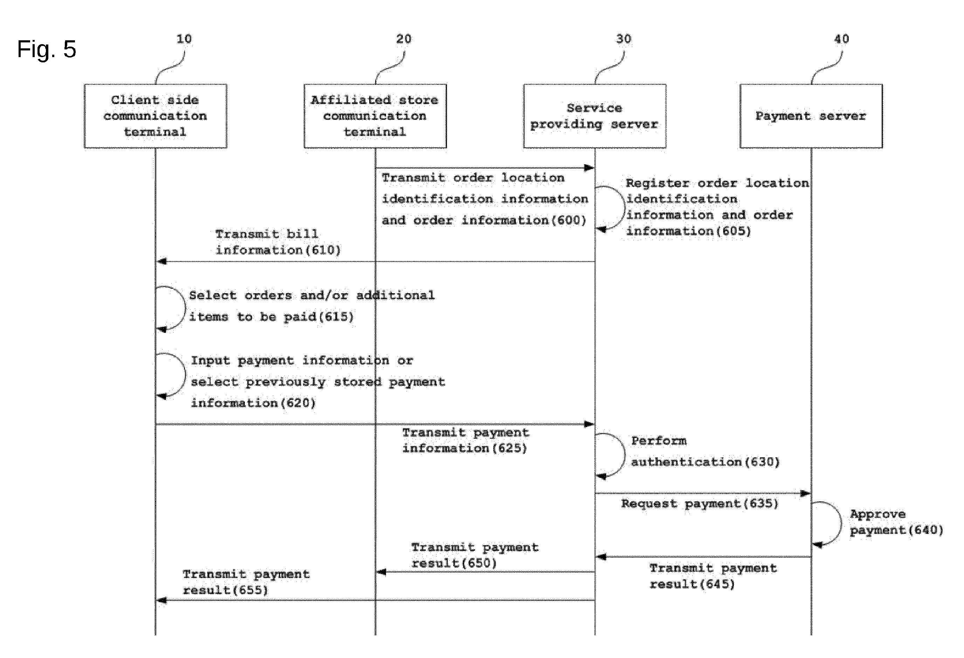

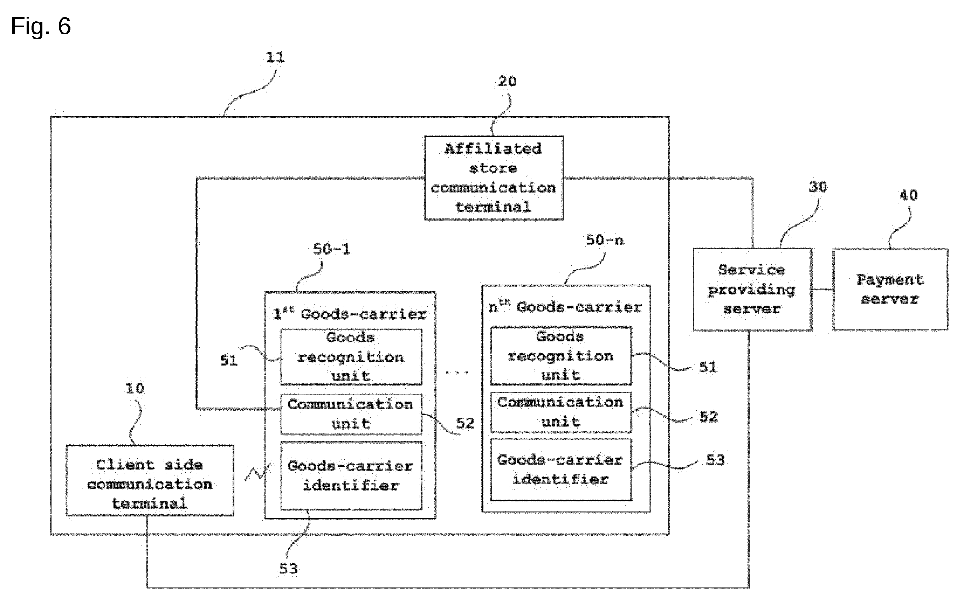

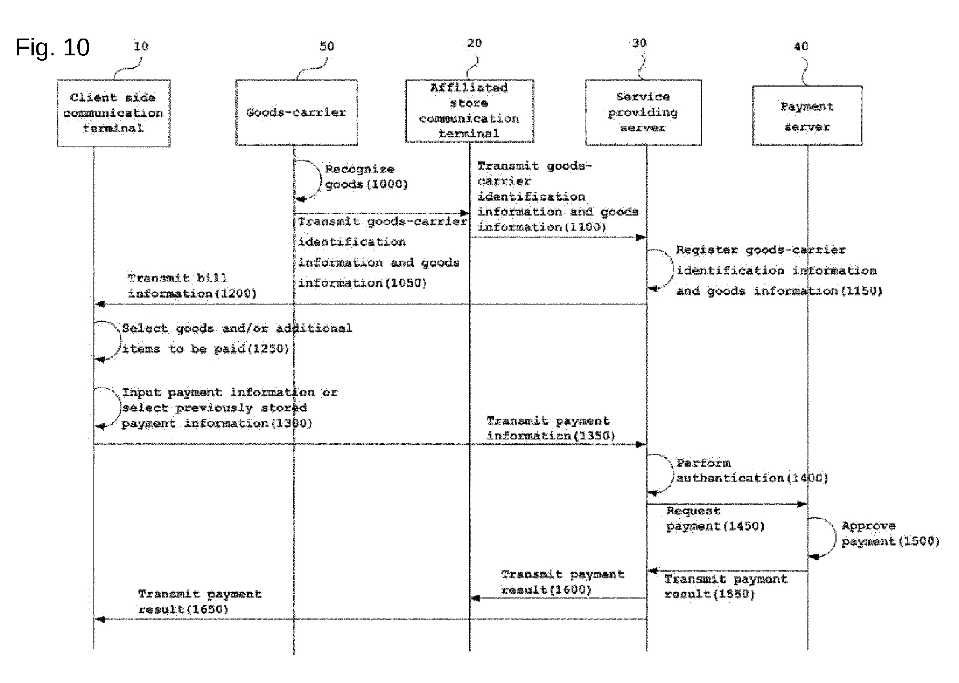

The preferred embodiments of the present invention will be hereinafter described in detail with reference to the accompanying drawings. This specification discloses the embodiments of an online meal payment method at a restaurant with reference to FIGs. 1 to 5 and the embodiments of an online goods payment method for goods contained in a goods-carrier with reference to FIGs. 6 to 10, both of which share the fundamental technical characteristics of the present invention. Further, the embodiments are merely exemplary embodiments of the present invention, and the scope of the present invention should not be limited to a specific embodiment.

FIG. 1 shows an environment where an online payment method of the present invention is carried out. As shown in FIG. 1, the environment comprises a client side communication terminal 10 at a restaurant space 1, an affiliated store communication terminal 20, 1^{st} table 5-1 to n^{th} table 5-n, a service providing server 30, and a payment server 40.

The communication terminal 10 in this specification means a terminal capable of data communication and data processing, such as a PC, a smartphone, a tablet PC or the like, and its type is not limited to a specific device. Since a basic configuration and structure of the communication terminal are widely known, detailed descriptions thereof is omitted in this specification. On the other hand, it should be understood that all the data transmission and communication process described in this specification can be carried out as encrypted data communication although it is not specifically mentioned.

The affiliated store communication terminal 20 communicating with the service providing server 30 may be placed in the restaurant space 1 or any place that can be managed by the restaurant.

In this specification, the service providing server 30 means a subject which provides an online payment service according to the present invention. Further, the payment server 40 means a payment gateway server and/or a financial institute server, and it should not be limited to any one of them. Although it is general that the payment gateway server is installed between the financial institute server which is a final payment approval subject and the service providing server 30, direct communication of the service providing server 30 with the financial institute server without the payment gateway server is also included in the present invention. In addition, a subject which operates the payment gateway server may also operate the service providing server. Alternatively, a subject which operates the service providing server may carry out the present invention by constructing the payment gateway server.

An order location identifier 15 is provided in each of the tables 5-1 to 5-n. The order location identifier 15 may be implemented with a near field wireless communication chip such as RF or NFC which contain order location identification information Mx-Tx. Alternatively, the identifier may be implemented in a QR code, text information or the like for a user who has a client side communication terminal 10 incapable of near field wireless communication.

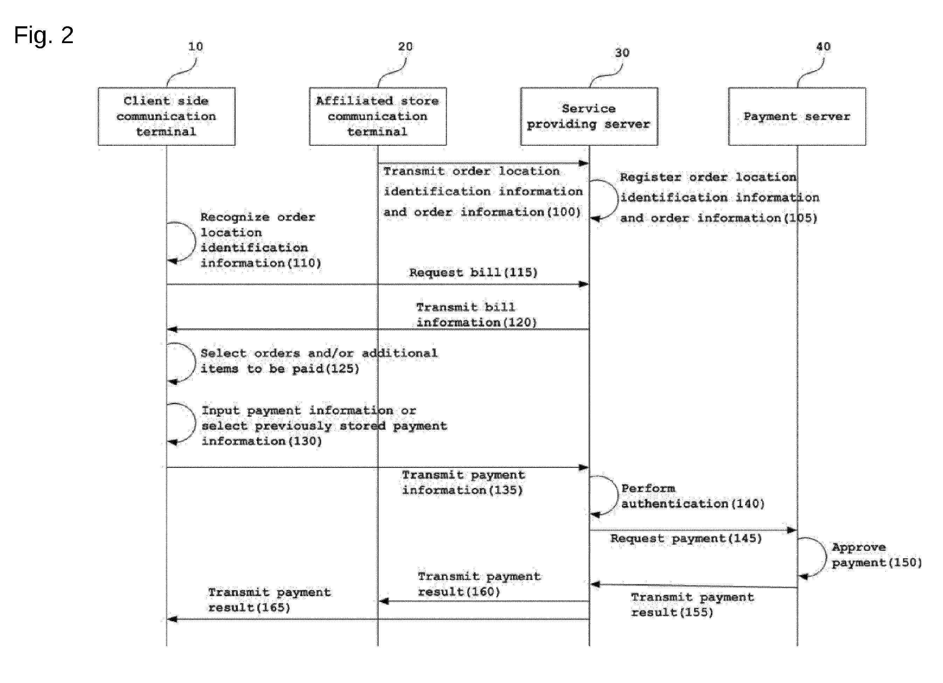

FIG. 2 shows a sequence diagram for carrying out an online meal payment method according to the present invention.

A user at any one of the tables 5-1 to 5-n arranged in the restaurant space 1 selects a food and/or a beverage from a menu and orders a waitperson the food and/or the beverage. Order information and order location identification information is transmitted to the service providing server 30 from the affiliated store communication terminal 20 (step 100). The order information Ox includes the name and quantity of the order of the food (beverage) selected by the user and the price of the ordered food (beverage). The user may place an order in an electronic method, not in a conventional manner of ordering a waitperson the food (beverage). If the user places an order by handling an electronic terminal (not shown) provided at the table 5, the order details and table information are transmitted to the affiliated store communication terminal or a separate reception terminal. Alternatively, the user may read a QR code or the like on the menu with eletronic device and transfer order information to the affiliated store. Since the electronic order method mentioned in the above may use well-known technique and a method of placing an order is not essential to the present invention, the detailed descriptions thereof will be omitted.

Order location identification information includes restaurant identification information Mx and table identification information Tx where the user places an order. A restaurant which desires to use the online meal payment service according to the present invention should previously register predetermined information in the service providing server 30.

The service providing server 30 registers the restaurant identification information Mx and the table identification information Tx (step 105).

The user recognizes the order location identifier 15 of the table by the client side communication terminal 10 or inputting text or the like indicating the order location identification information into the client side communication terminal 10 (step 110). In this specification, recognition of the identification information is interpreted to include the recognition of the identification information by inputting text or the like indicating the information.

Although it is preferred that an application program for carrying out the online payment service according to the present invention is installed in the client side communication terminal 10, the user may also carry out the payment service according to the present invention by connecting to the service providing server 30 through a browser installed in the client side communication terminal 10.

The client side communication terminal 10 transmits the recognized order location identification information to the service providing server 30 and requests the bill for the order location (step 115). The service providing server 30 transmits bill information Bill-Mx-Tx-Ox based on the order information transmitted from the affiliated store communication terminal 20 to the client side communication terminal 10 in response to the order location information Mx-Tx transmitted from the client side communication terminal 10 (step 120). It is preferred that the bill information is the information on an order placed at a corresponding table, which is split by the menu items.

The user selects the items to be paid from the bill displayed on the client side communication terminal 10. If there is any additional item to be paid such as a gratuity, the user may additionally select the item (step 125). If the items to be paid are selected, payment basic information Px such as credit card information is inputted into the client side communication terminal 10 (step 130). If the payment basic information is previously stored in the client side communication terminal 10 or the service providing server 30, the previously stored payment basic information Px may be fetched and selected. In this specification, the payment basic information means information on a payment means such as a credit card number, a password and the like.

Information including the inputted or selected payment basic information Px, the user identification information Ux, the order location identification information Mx-Tx and the order information Ox is defined as payment information and is transmitted to the service providing server 30 (step 135). If the payment basic information Px is previously stored in the service providing server 30, the payment basic information transmitted at step 135 may be identification information which can specify the payment basic information stored in the service providing server 30, not the information on a specific payment means (e.g., a credit card number and a password). For example, if the payment basic information for a plurality of payment means is registered in the service providing server 30 and the user selects a specific payment means among them, only the information specifying the corresponding payment means can be transmitted to the service providing server 30 as payment basic information.

The service providing server 30 which received the payment information carrys out authentication (step 140). The authentication is carried out by comparing the order location identification information Mx-Tx and the order information Ox received from the affiliated store communication terminal 20 at step 100 with the order location identification information Mx-Tx and the order information Ox included in the payment information transmitted from the client side communication terminal 10 at step 135. If the information matches, payment is requested by transmitting the payment basic information and the user identification information to the payment server 40 (step 145). If the payment server 40 does not request user identification information, it will be fine to transmit only the payment basic information. The payment server 40 approves the payment (step 150) and transmits the payment result to the service providing server 30 (step 155). The service providing server 30 transmits the payment result to the affiliated store communication terminal 20 and the client side communication terminal 10 (steps 160 and 165).

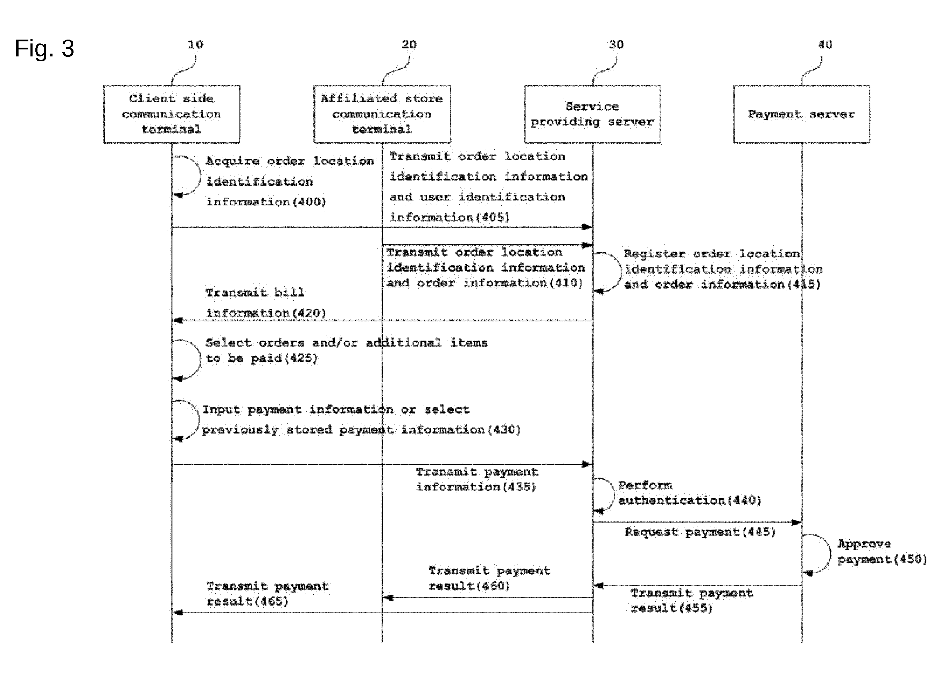

FIG. 3 shows a sequence diagram of an online meal payment method according to another embodiment of the present invention.

In this embodiment, the user uses the client side communication terminal 10 to acquire order location identification information Mx-Tx from the order location identifier 15 (step 400) and carries out check-in by transmitting the acquired order location identification information Mx-Tx and user identification information to the service providing server 30 together. The restaurant which receives an order from the user transmits the order location identification information Mx-Tx and the order information to the service providing server 30 through the affiliated store communication terminal 20. The service providing server 30 registers the order location identification information Mx-Tx and the order information (step 415).

The service providing server 30 determines whether or not there is a check-in record corresponding to the order location identification information Mx-Tx registered at step 415. If there is a check-in record of the client side communication terminal 10 corresponding to the order location identification information Mx-Tx, the service providing server 30 transmits bill information to the client side communication terminal 10 (step 420).

Since the steps of this embodiment carried out after transmitting the bill information are almost the same as those of the embodiment described with reference to FIG. 2, detailed descriptions of the following steps are replaced by those described above with reference to FIG. 2.

Although it is shown in FIG. 3 that the check-in steps 400 and 405 of the user precede the step of transmitting the order location identification information Mx-Tx and the order information Ox by the affiliated store communication terminal 20, the order of steps may be changed without affecting the main idea of the present invention, and it should not be interpreted to limit the scope of the present invention by the order of steps.

This embodiment has an advantage of omitting the step of requesting a bill since the service providing server 30 automatically transmits bill information to the client side communication terminal 10 when the user checks in through the client side communication terminal 10 by use of the order location identification information Mx-Tx acquired from the order location identifier 15. Further, the information on the user who checks in, for example, the number of visits in the past, the information on the amount of sales in the past, details of transactions, identification information and the like can be acquired from the service providing server 30, thereby making it possible to provide service specialized for the user and to provide proactive service.

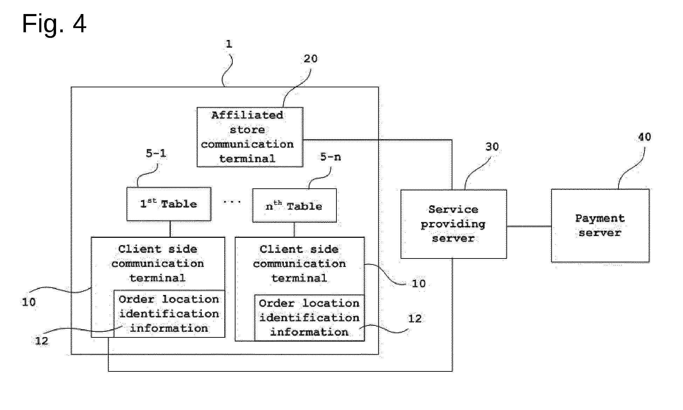

FIG. 4 shows an environment for carrying out an online meal payment method according to still another embodiment of the present invention. In this embodiment, the client side communication terminal 10 is not a terminal which is in possession of a user, but a terminal provided on the tables 5-1 to 5-n in the restaurant space 1.

In this embodiment, the order location identification information Mx-Tx is loaded on the client side communication terminal 10 and is subordinate to the table where the client side communication terminal 10 is mounted.

The restaurant which receives an order from the user transmits the order location identification information Mx-Tx and the order information Ox to the service providing server 30 through the affiliated store communication terminal 20 (step 600). The service providing server 30 registers the order location identification information Mx-Tx and the order information Ox (step 605).

Then, the service providing server 30 transmits bill information to the client side communication terminal 10 which corresponds to the order location identification information Mx-Tx (step 610).

The user operates the client side communication terminal 10 for the online payment service to display the bill received from the service providing server 30 on the terminal. The steps thereafter are almost the same as those of the embodiments shown in FIGs. 2 and 3. In the step 620, the user may input the payment basic information through a near field communication between the chip such as NFC chip or RF chip containing the payment basic information and the client side communication terminal 10 provided at the table. Alternatively, the payment basic information may be inputted directly through a keypad or the like.

According to this embodiment, it is advantageous in that even a user who does not have a client side communication terminal such as a smartphone may use the payment service according to the present invention.

According to the online meal payment method according to the present invention, it may be configured to handle a so-called Dutch treat in which an order of several persons is paid by splitting a billed amount into their own shares or to pay for meals of a plurality of tables all together.

The bill information transmitted to the client side communication terminal 10 is the information that can be split and displayed by the ordered menu items. If each of several persons respectively recognizes the order location identification information Mx-Tx and requests a bill by use of his/her own client side communication terminal 10 or if each of the several persons checks in as described in the embodiment shown in FIG. 3, a bill is transmitted to each of them. Each of the users may select his/her own order to be paid at steps 125 or 425 and may make a payment individually. The selection fields of the orders for which payment has already been made may be deactivated to prevent the other users from inadvertently paying for them. When all the users make a payment and the payment is completed, the service providing server 30 notifies the affiliated store communication terminal 20 that the payment has been completed. In the embodiment shown in FIG. 3, each user selects the orders to be paid in the client side communication terminals 10 provided on the tables 5-1 to 5-n and make a payment by inputting payment basic information thereto.

In order to pay for the orders of several tables, the user makes a payment according to the previously described method individually for each of the several tables, or requests the restaurant to combine bills of the several tables so that the affiliated store communication terminal 20 transmits combined bill information to the service providing server 30. The user may make a payment for the combined bill according to the previously described method.

In the following, the embodiments relating to an online payment method for goods contained in a goods-carrier will be described with reference to FIGs. 6 to 10. Although it is described in regard to goods-carriers 50-1 to 50-n in a large-scale wholesale store, any carrier which can be arranged in an affiliated store space 11 and contain goods, may be applied as the goods-carriers 50-1 to 50-n regardless of its type.

The goods-carrier 50 comprises a goods recognition unit 51, a communication unit 52 and a goods-carrier identifier 53. The goods recognition unit 51 is a device capable of recognizing the information of goods in the affiliated store space 11, such as a bar code scanner, a QR code scanner, RFID reader or the like. The communication unit 52 is a device capable of communicating with the affiliated store communication terminal 20. The device can use a short range wireless communication or a wireless local area network technology. A communication device of the affiliated store communicating with the communication unit 52 may be a separate communication terminal capable of transmitting data to the affiliated store communication terminal 20 which communicates with the service providing server 30. In this embodiment, it should be understood that descriptions for the communications between the communication unit 52 and the affiliated store communication terminal 20 include all the cases in which the communication unit 52 communicates with a separate communication terminal provided in the affiated store.

The goods-carrier identifier 53 is provided in each of the goods-carriers 50-1 to 50-n and uses a near field wireless communication chip such as RF or NFC. The goods-carrier identifier may contain goods-carrier identification information Mx-Tx. Alternatively, the goods-carrier may be implemented as a QR code, text information or the like for a user having a client side communication terminal 10 incapable of near field wireless communication. The goods-carrier identification information includes identification information Mx of an affiliated store and identification information Tx for identifying a goods-carrier in the affiliated store.

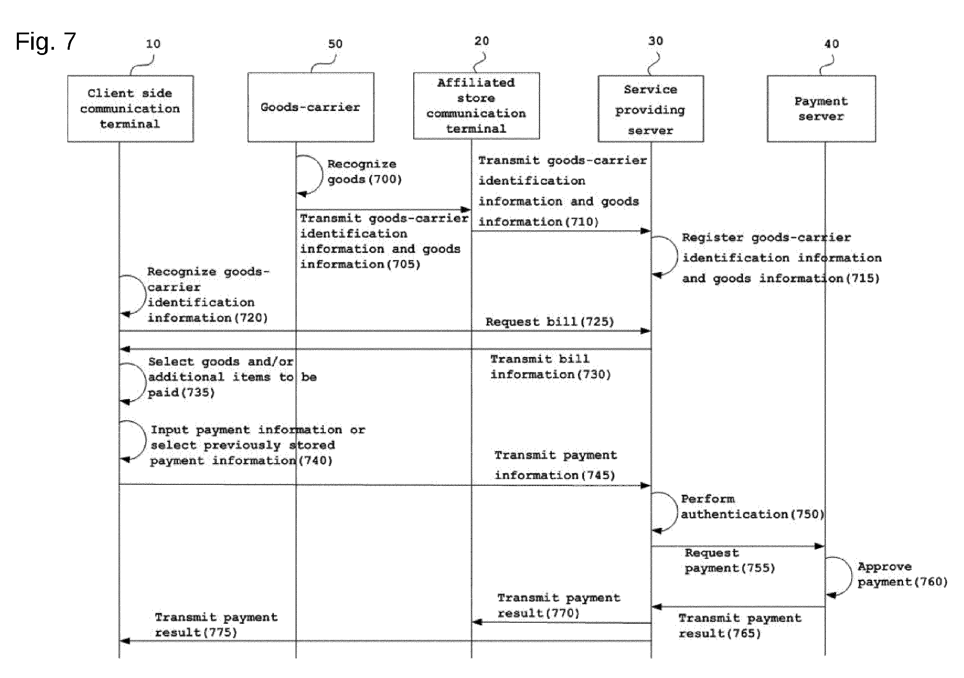

Next, a payment method according to this embodiment will be described with reference to FIG. 7. When a user finds goods to be purchased while carrying the goods-carrier 50 in a wholesale store, the user recognizes the goods with use of the goods recognition unit 51 of the goods-carrier 50 (step 700). The recognized goods are put into the goods-carrier 50.

The goods-carrier 50 transmits the recognized goods information Ox and the goods-carrier identification information Mx-Tx to the affiliated store communication terminal 20 through the communication unit 52 (step 705). The identification information Mx of the affiliated store may not be included in the goods-carrier identification information transmitted to the affiliated store communication terminal 20 by the goods-carrier 50.

The affiliated store communication terminal 20 transmits the goods-carrier identification information Mx-Tx and the goods information Ox to the service providing server 30 (step 710). The service providing server 30 registers the goods-carrier identification information and the goods information (step 715).

The user recognizes the goods-carrier identification information Mx-Tx contained in the goods-carrier identifier 53 with the use of the client side communication terminal 10 (step 720) and requests a bill for the goods to be purchased from the service providing server 30 (step 725). When the bill is requested, the goods-carrier identification information Mx-Tx recognized at step 720 is also transmitted.

Although it is preferred that an application program for using the online goods payment service according to the present invention is installed in the client side communication terminal 10 of the user, it may be configured to use the online payment service according to the present invention by connecting to the service providing server 30 through a browser installed in the client side communication terminal 10.

The service providing server 30 transmits bill information Bill-Mx-Tx-Ox corresponding to the goods-carrier identification information Mx-Tx transmitted together with the bill request to the client side communication terminal 10 (step 730). The user selects goods to be paid among the goods displayed on the client side communication terminal 10 and selects the other items to be paid (step 735). Since the steps thereafter are almost the same as those of the embodiment described with reference to FIGs. 1 to 5, descriptions thereof will be omitted. The payment information transmitted at step 745 is defined to include payment basic information Px, user identification information Ux, goods-carrier identification information Mx-Tx and goods information Ox as the same meaning described in the embodiment shown in FIGs 1 to 5.

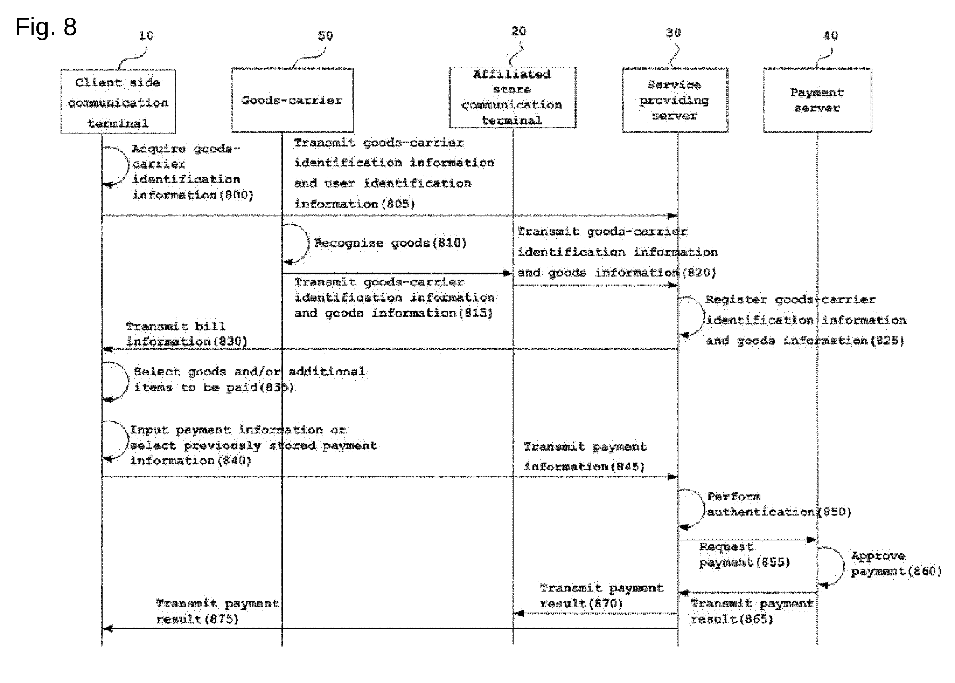

FIG. 8 shows a sequence diagram of an online goods payment method according to another embodiment of the present invention. In the embodiment shown in FIG. 8, a user carries out check-in like in the embodiment of meal payment at a restaurant as shown in FIG. 3.

A user acquires identification information Mx-Tx of a goods-carrier from the goods-carrier identifier 53 of the goods-carrier 50 (step 800) and transmits the acquired information to the service providing server 30 and the user identification information (step 805). This step corresponds to a user check-in. The user thereafter selects goods to be purchased and recognizes the selected goods with the use of the goods recognition unit 51 of the goods-carrier 50 (step 810). The communication unit 52 transmits the recognized goods information Ox to the affiliated store communication terminal 20 and the goods-carrier identification information Mx-Tx (step 815). The affiliated store communication terminal 20 transmits the goods information Ox and the goods-carrier identification information Mx-Tx to the service providing server 30 (step 820), and then the service providing server 30 registers the information (step 825).

The service providing server 30 confirms whether or not there is a check-in record corresponding to the goods-carrier identification information Mx-Tx, and if there is a check-in record, the service providing server 30 transmits bill information to the client side communication terminal 10 of the user (step 830). Since the steps thereafter are the same as those of the embodiment described above, detailed descriptions thereof will be omitted.

When a user purchases a large quantity of goods, a step of transmitting a signal indicating that selection of goods to be purchased is completed to the service providing server 30 through the goods-carrier 50 by way of the affiliated store communication terminal 20 can be added. At this point, after receiving the goods selection completion signal, the service providing server 30 transmits bill information to the client side communication terminal 10 (step 730).

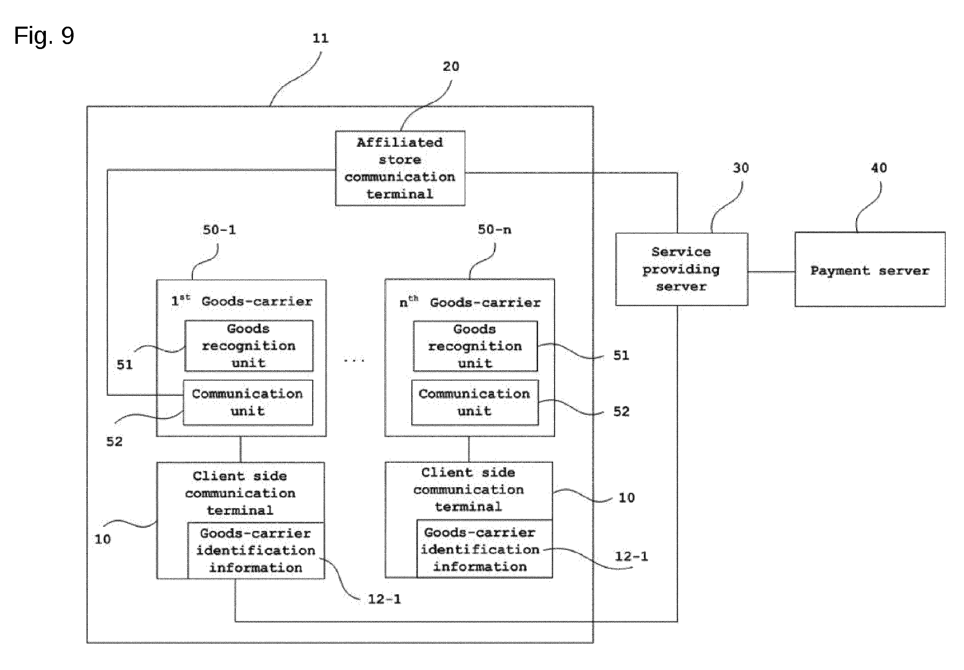

FIG. 9 shows an environment where an online goods payment method according to still another embodiment of the present invention are carried out. In this embodiment, the client side communication terminal 10 is not a terminal in possession of a user, but a terminal provided in each of the goods-carriers 50-1 to 50-n in the affiliated store space 11. The goods-carrier identification information Mx-Tx is embedded in the client side communication terminal 10 of FIG. 9 and is subordinate to a goods-carrier where the client side communication terminal 10 is mounted.

If the user recognizes the goods to be purchased with the use of the goods recognition unit 51 of the goods-carrier 50 (step 1000), the communication unit 52 of the goods-carrier 50 transmits the goods-carrier identification information Mx-Tx or Tx and the goods information Ox to the affiliated store communication terminal 20 (step 1050). The affiliated store communication terminal 30 transmits the goods-carrier identification information Mx-Tx and the goods information Ox to the service providing server 30, and the service providing server 30 registers the goods-carrier identification information Mx-Tx and the goods information Ox (steps 1100 and 1150).

If the user completes selection of goods and starts the client side communication terminal 10 to make a payment, the service providing server automatically transmits bill information (step 1200). The user makes a payment by carrying out a payment process after confirming the bill information through the client side communication terminal 10. When payment information is inputted at step 1300, the user may input the payment information through a near field communication between the client side communication terminal 10 and a hand-held near field wireless communication device, for example, an NFC chip or an RF chip where payment basic information is contained. This embodiment is advantageous in that even a user who does not have a client side communication terminal such as a smartphone may use the online payment service according to the present invention.

While the present invention has been described with reference to the particular illustrative embodiments, it is not to be restricted by the embodiments but only by the appended claims. It is to be appreciated that those skilled in the art can change or modify the embodiments without departing from the scope and spirit of the present invention.

## Claims

1. An online meal payment method carried out by a service providing server in an environment including a client side communication terminal, an affiliated store communication terminal, the service providing server and a payment server, the method comprising:
a first step of receiving order location identification information and order information from the affiliated store communication terminal and registering the order location identification information and the order information;
a second step of transmitting bill information to the client side communication terminal;
a third step of receiving payment information from the client side communication terminal;
a fourth step of carrying out authentication based on the order location identification information and the order information acquired at the first step and the payment information received at the third step; and
a fifth step of requesting payment by transmitting payment basic information to the payment server if the authentication is successful.

2. The method according to claim 1, further comprising a step 1-1 of receiving a request for transmitting the bill information from the client side communication terminal which recognizes the order location identification information.

3. The method according to claim 1, further comprising a step 1-2 of receiving the recognized order location identification information and user identification information from the client side communication terminal which recognizes the order location identification information.

4. The method according to claim 1 or 3, wherein the client side communication terminal is a communication terminal where the order location identification information is stored.

5. The method according to any one of claims 1 to 3, wherein the bill information is information that can be split and displayed by ordered menu items, and the payment information of the third step is payment information on some of the split and displayed menu items.

6. The method according to claim 4, wherein the bill information is information that can be split and displayed by ordered menu items, and the payment information of the third step is payment information on some of the split and displayed menu items.

7. The method according to any one of claims 1 to 3, wherein the bill information is bill information relating to a plurality of pieces of order information corresponding to a plurality of pieces of order location identification information.

8. An online goods payment method carried out by a service providing server in an environment including a client side communication terminal, an affiliated store communication terminal, the service providing server, a goods-carrier including a goods recognition unit, a communication unit and a goods-carrier identifier, and a payment server, the method comprising:
a first step of receiving goods information recognized by the goods recognition unit and goods-carrier identification information which are transmitted to the affiliated store communication terminal by the goods-carrier, from the affiliated store communication terminal and registering the goods information and the goods-carrier identification information;
a second step of transmitting bill information to the client side communication terminal;
a third step of receiving payment information from the client side communication terminal;
a fourth step of carrying out authentication based on the goods-carrier identification information and the goods information acquired at the first step and the payment information received at the third step; and
a fifth step of requesting payment by transmitting payment basic information to the payment server if the authentication is successful.

9. The method according to claim 8, further comprising a step 1-1 of receiving a request for transmitting the bill information from the client side communication terminal which recognizes the goods-carrier identification information.

10. The method according to claim 8, further comprising a step 1-2 of receiving the recognized goods-carrier identification information and user identification information from the client side communication terminal which recognizes the goods-carrier identification information.

11. The method according to claim 8 or 10, wherein the client side communication terminal is a communication terminal where the goods-carrier identification information is stored.
